# EUROPEAN PATENT APPLICATION

(11) **EP 1 191 468 A1**
(43) Date of publication of application: **27.03.2002**
(21) Application number: 00830636.7
(22) Date of filing: 25.09.2000
(51) Int. Cl.: G06F 17/60

(54) **Method and system for collecting and providing data**

(71) Applicant: Finesso, Adriano, 31015 Conegliano Veneto - Treviso (IT)
(72) Inventor: Finesso, Adriano, 31015 Conegliano Veneto - Treviso (IT)
(74) Representative: Botti, Mario

(57) **Abstract**

Presented is a system to collect a large number of disparate data. A central server performs many of the functions. First, it may host database server and interacts with the storage to display the data of a database. Secondly, it hosts a program, which is interactive with a user, to collect information from a plurality of users and provide information to a user interface. Generally, the users connect to the central server through Internet. Furthermore, a program running on the central server records the collected data from different sources and such data are made available for use by other users. In a certain context, the data are specifically relevant to the bank industry and allow comparison of taxes and costs among different banks. In an embodiment, the compared banks can be the ones of a specific city, region or province. The results of the calculations relevant to the comparisons are partially based on the data inserted by the user.

## Description

### Technical Field

This invention relates to a method and device for collecting large amounts of disparate data, and more specifically, for collecting large amounts of disparate data that would otherwise be difficult to collect, as well as performing calculations on the collected data to provide results that become more useful and accurate as the amount of data collected increases.

### Background of the invention

In many industries, costs or fees for doing business are generally closely guarded. This is true because if a competitor knows the true costs or fees of a business, the competitor can easily adjust their own costs or fees in an effort to lure clients to their own business. In some cases, knowledge of costs or fees of a business would allow a competitor to know with precision exactly how successful the business is, or the profits the business generates, which is usually private information.

Business must, however, avail to their customers their costs and fees. Oftentimes these costs and fees are only revealed to the customer in the terms of a final bill presenting combined costs for materials and services, as happens in a home remodeling project, for example. Other times the costs and fees are presented to customers upon request. Sometimes only a partial list is provided. Sometimes a list is provided but it is frequently updated, such as in the case of computer equipment suppliers.

Even if costs and fees are routinely provided to a customer, it is difficult and time consuming for a customer to visit a number of businesses to determine which is the most cost effective business with which to contract.

As an example, the banking industry is one which generally provides their rates and fees only to their own customers. Data such as interest rates for depositing or borrowing funds are routinely available. Other fees, such as transaction fees for cashing checks or a service fee for providing a debit or credit card are also generally provided to customers upon request.

Although it is generally easy to acquire this bank fee information, the information is usually provided only to existing customers, or it is provided only in the process of becoming a bank customer. Generally, this information is only provided to individuals in person, and will not be revealed by mail or on the telephone, at least not to non-customers. It can therefore be difficult and/or time consuming to solicit this data from all of the banks in a general geographical region in order to decide which bank is best for the particular customer. Also, gathering data from multiple geographic regions would require traveling long distances and a great deal of time.

However, such information is very useful in that one bank's costs can vary widely from another bank, even in the same geographic region or, moreover, even in the same city. It is also possible that a customer is primarily interested in only the cost of one function of the bank, such as transaction fees for drawing or/and collecting international checks. In that case, this particular fee would be of most importance to that customer. However, to gather only this information would require personally visiting each bank to determine which is the most advantageous rate.

A similar problem exists for comparison of connection rates for portable telephones in that a customer or potential customer must visit several businesses in order to compare costs with one another. A major difference between banks and portable telephones shops is the one relevant to the fact that while there may be only 2 or 3 different portable telephone companies (such as Tim, Wind, Omnitel, etc.), available to compare rates and choose the best plan, there can be dozens or hundreds of banks available with which to do business.

The technical problem addressed by this invention is to enable customers or potential customers to easily access accurate industry data, such as costs and fees of a certain business or service where the data is difficult or impossible to singularly collect. In addition, the technical problem addressed by this invention involves an analysis of the collected data to help a potential customer evaluate which business is the best for particular situations.

### Summary of the invention

The resolutive idea at the basis of the present invention is that of providing a central forum to collect disparate data from a plurality of disparate sources and to evaluate the data in order to provide a useful result. One particular advantage of the resolutive idea is that the data evaluation becomes increasingly useful and correct as more data is collected.

Preferably, the collected data are spontaneously provided by single customers or users.

On the basis of such idea for a solution the technical problem is resolved by a device of the type previously indicated and defined by claim 1.

The invention also relates to a method for collecting and providing a great amount of disparate data, as defined in claim 8 and following.

The characteristics and advantages of the method and the device according to the invention will be seen from the description, following herein, of an embodiment given as an indication and not limiting with reference to the drawings attached

### Brief description of the drawings

Figure 1 is a diagram showing connections to a computer network.
Figure 2 is a view of a screen that represents a primary access to the system according to the invention.
Figure 3 shows a table reporting a list of data about possible system customers that is stored in the database.
Figures 4a and 4b show relevant tables reporting lists of data about banks that are stored in the database.
Figure 5 is a relationship diagram showing relations between tables stored in the database.
Figure 6 is a schematic view of a computer screen showing results of a calculation performed by data stored in the database.

### Detailed Description

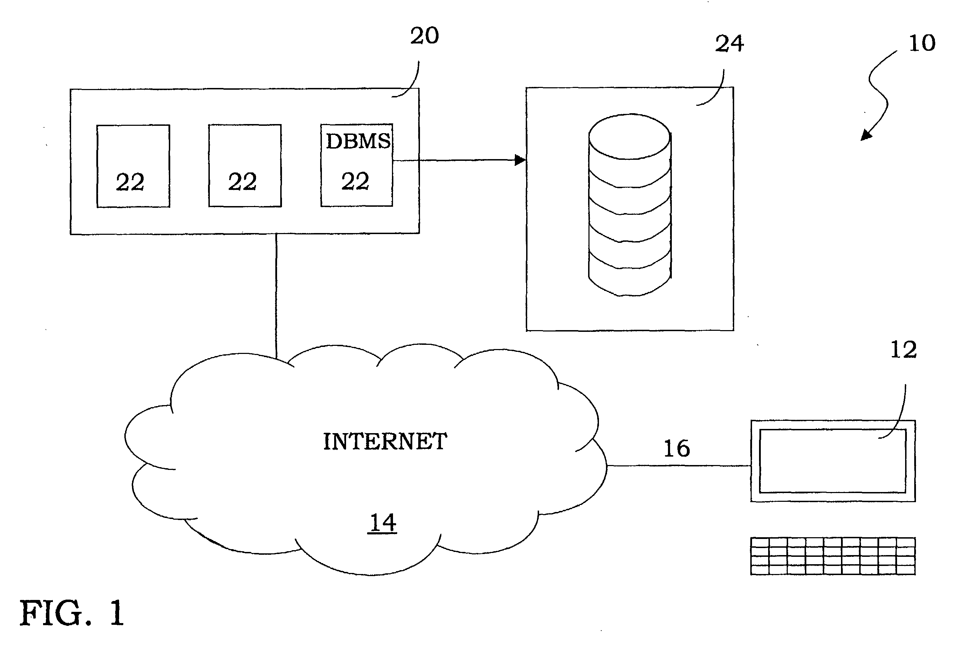

In one embodiment of the invention, an individual uses a personal computer that is connected to the Internet or other communication network to access a central data repository site. For instance, as seen in Figure 1, an interconnection overall system 10 between computers is presented. Within this system 10, a user machine 12 is connected to a communication network 14, such as the Internet 14 via a connection 16. The connection 16 may be a standard phone line, ISDN, DSL, cable TV, WebTV, or a satellite link, for example. The actual method of communication between the user machine 12 and the communication network 14 is unimportant, so long as the user machine can send to and receive information from the communication network.

By way of example, the user machine 12 may be a personal computer (PC) running a WINDOWS or other operating system (OS). A web browser, such as Netscape Navigator or Windows Internet Explorer could be running on the user machine 12, as controlled by the OS. The latest browser versions are fully capable of displaying the latest versions of Hyper Text Markup Language (HTML), and are able to present and to retrieve data from the user machine 12. Additionally, the browsers may contain, either as built in applications or "plug-in" applications, the ability to run Java applets, or Active-x components. These applications allow actual processes to be sent over the Internet 14 and run on the user machine 12. This provides the user with many more tools than only being able to view and send static data.

Alternatively or additionally, the user machine 12 can run scripts, such as Javascript, and the ability to display dynamic HTML (DHTML) web pages. Other programs may be available to the user machine 12 that allow it to perform Tabular Data Control (TDC), a technique that allows ASCII data to be published in tabular form. Further, the user machine 12 may be able to utilize Frontpage extensions, which allow interaction between the user machine and data servers that are connected to the Internet 14.

An example of a data server that is connected to the Internet 14 is a host machine 20 that can simultaneously run a variety of processes 22 for each computer. The host machine 20 would have an OS more tailored to networks than the OS running on the user machine 12. The OS of the host machine 20 could be a windows based OS such as Windows NT, or could be a variety of Unix, such as Linux, or any of the other widespread commercially available host machine operating systems.

Running on the host machine 20 could be a number of different processes 22, each having a specialized function. For example, one of the processes 22 could be a webserver that is used to host the HTML code that can be accessed by the user machine 12.

Another of the processes 22 running on the host machine 20 could include a central database server or database management system (DBMS). The DBMS process 22 could be on the host machine 20, or could be running on a different machine (not shown since it is conventional) directly coupled to either the host machine 20 or the Internet 14. In Figure 1, a DBMS process 22 is shown as being one of the processes 22 running on the host machine 20, but Figure 1 is largely a functional diagram, and does not necessarily display where the processes 22 are actually running. The DBMS process 22 shown in Figure 1 is directly connected to a database 24. The database 24 could alternatively be another process 22 running on the host machine 20, but is shown separately for ease of description and understanding. If the database 24 were running on the host machine 20, the connection between the DBMS process 22 and the database 24 would, of course, be internal to the host machine 20.

The database 24 is preferably a relational database, such as Oracle, available from Oracle Corporation, or Access, available from Microsoft Corporation, but any acceptable database, such as a hierarchical or a network database would suffice. The relational database is preferred because of its ease of implementation and operation, and its ability to easily respond to commands that can be received over the internet 14, as discussed below.

Other processes 22 would also be running on the host machine 20. For instance, a process 22 capable of running active server pages (asp) is desirable, because it can easily convey information to the database 24, format it as a hypertext page, and send it to the user machine 12 to provide the desired information. Other processes 22 could include a Java servlet, which are Java applications that can be run on a server, or host machine 20.

It is relatively unimportant, for the purposes of the invention, the exact mechanism for interaction between the individual using the user machine 12 and the central data repository, other than it must be easy for the individual to enter data into the central data repository, and it must be easy for the individual to retrieve information from the central data repository. Particularly important for the individual using the user machine 12 is the information that has been entered by users of other machines 12, and the information that is provided by analysis of the data collected by these individuals, as discussed below.

By way of example, a scenario will be described between a typical user of a user machine 12, and how the user provides data for and retrieves data from the database 24.

Communication between the user and the central process starts when the user directs the browser running on the user machine 12 to the address of the central server host machine 20. Typically this is done by typing in the "web address" for the host machine 20 into the browser. This web address is translated through a lookup table into a numerical code, and the browser sends a request for a HTML page to the numerical code retrieved from the lookup table, which identifies the correct host machine 20. Largely, this addressing and lookup is completely transparent to the user, who only knows the web address of the website that is storing the desired HTML pages and hosted by the host machine 20.

Once the host machine 20, or more particularly, one of the processes 22 running on the host machine 20 acknowledges that a user is communicating with it over the internet 14, the process 22 will send a first HTML page back to the user to be displayed by the browser running on the user machine 12. In the remainder of the description, such detail about the actual inter-workings of the browser running on the host machine and the processes 22 running on the host machine 20 will be omitted for brevity. Instead, the description will state that the user requests a certain page, and the certain page is sent to the user by the host machine 20.

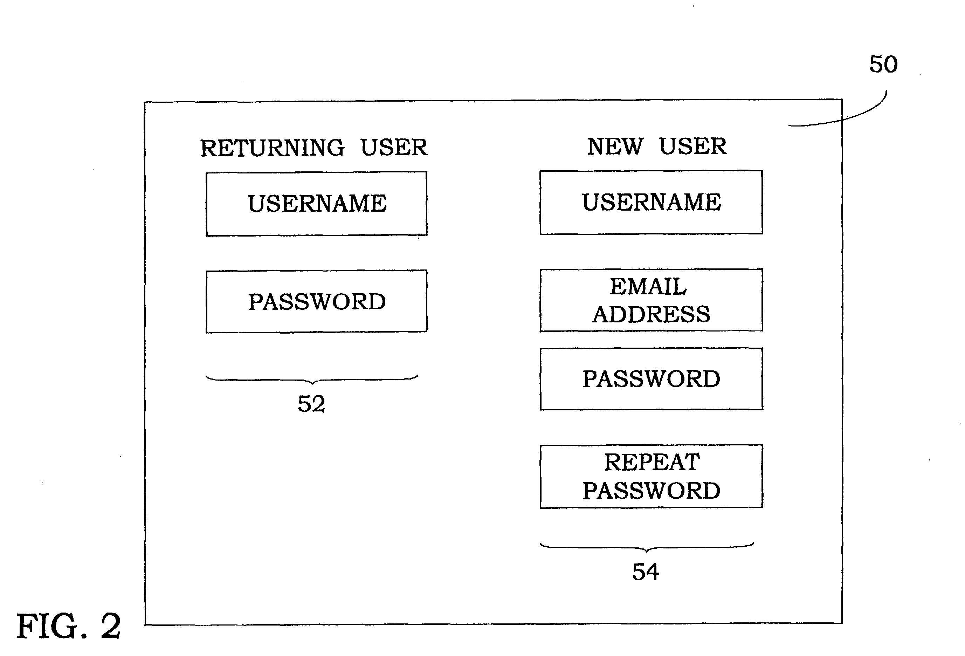

When the user first contacts the host machine 20, an identification of the user will take place. For example, a screen, such as an ID screen 50 shown in Figure 2 may be displayed. The ID screen 50 prompts the user for different information depending on whether the user has been prior registered in the database 24. If the user has a prior registration and is a returning user, the user will only need to enter the Username and Password in the fields 52 of the ID screen 50. It is also possible that a unique piece of data (e.g., a cookie, as is known in the art) stored on the user machine 12 could identify the prior user to the database 24, thus bypassing the need for a username and password to be entered. If, on the other hand, the user has not been registered in the database 24, preliminary fields, such as those shown as fields 54 on the ID screen 50 must be completed by the new user in order to establish themselves in the database 24.

Once the user is registered with the database 24, certain data is requested of the user. In one example a form is presented on the browser of the user computer 12, but any possible way for the information to be stored in the database is acceptable. For instance, a customer representative may telephone the user to acquire the information. Another possibility is for a letter to be generated and sent to the user requesting the certain data. Of course, in those instances, a phone number and an address, respectively, would have to be known. A much simpler way to receive the desired data from the user is to present a further screen requesting that the data be entered.

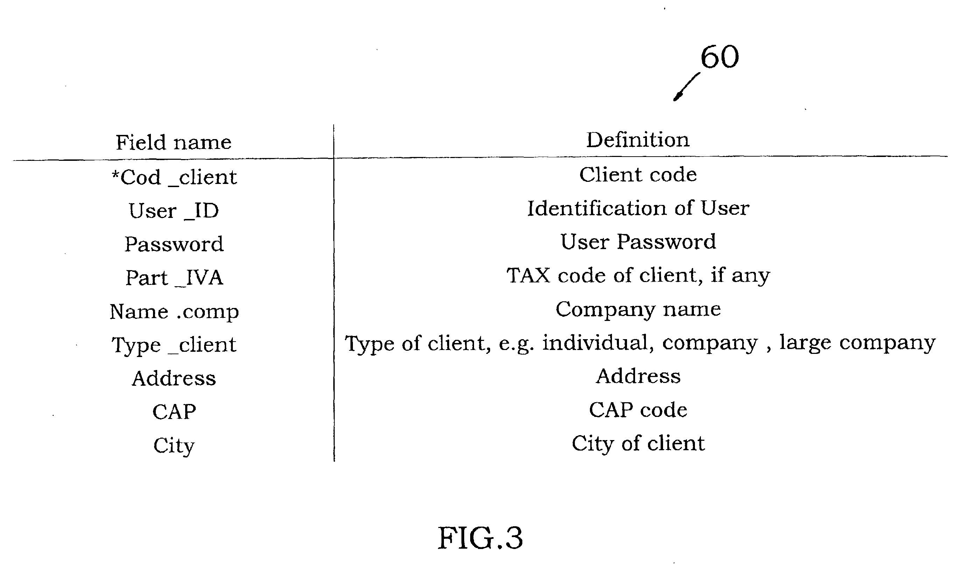

Examples of a list of data that could be accepted from the user appear in a list 60 on Figure 3. This list 60 is only a representative list of the types of information that could be stored in one embodiment, but the list 60 is not an exhaustive list of the data requested and stored. Standard types of information, such as the name and address of the user, a unique user-id and password are received from the user and stored in the database 24. If the database is of the preferred relational type, all of the client information can be stored in a separate table, and related to other data stored in the database as detailed below. In a table in a relational database, there must be one piece of data that is unique across all of the data in the table. For instance, in the list 60 of Figure 3, one of the fields must be identified as a primary key. A primary key means that the data stored in that particular filed of the table must be absolutely unique. In other words, and with reference to the list 60 of Figure 3, the User_id field is the primary key, and no two User_id's can be the same in the entire database.

Also, as seen in the list 60 of Figure 3, information that can be used by the central process is also stored about the user. For instance, the type of client, e.g. individual, small company, or large company can be associated with a User_id and stored in the database 24 in the list 60. As described above, this list 60 could be referred to as the user table. Knowing the type of client can be of importance when performing some of the calculations on the data stored in the database, as described below. For instance, when determining an average percentage rate for a certain type of loan, particular classes of users and their associated data that they have entered, can be omitted in an effort to provide more accurate data.

After the form has been presented to the user and the user filled in the data and sent it back to the host machine 20 to be stored in the database 24, the central process then proceeds to interview the client about the client's own bank.

When the client enters data about their own bank, such as interest rates, check charges, bank fees, etc, that data is stored in the database 24. The central process can use this data, along with the data provided by other users about their banks to calculate various useful data and provide to the users information regarding the best bank available to the user. More will be discussed about what the central process does with the stored data after more examples of the types of data collected are given.

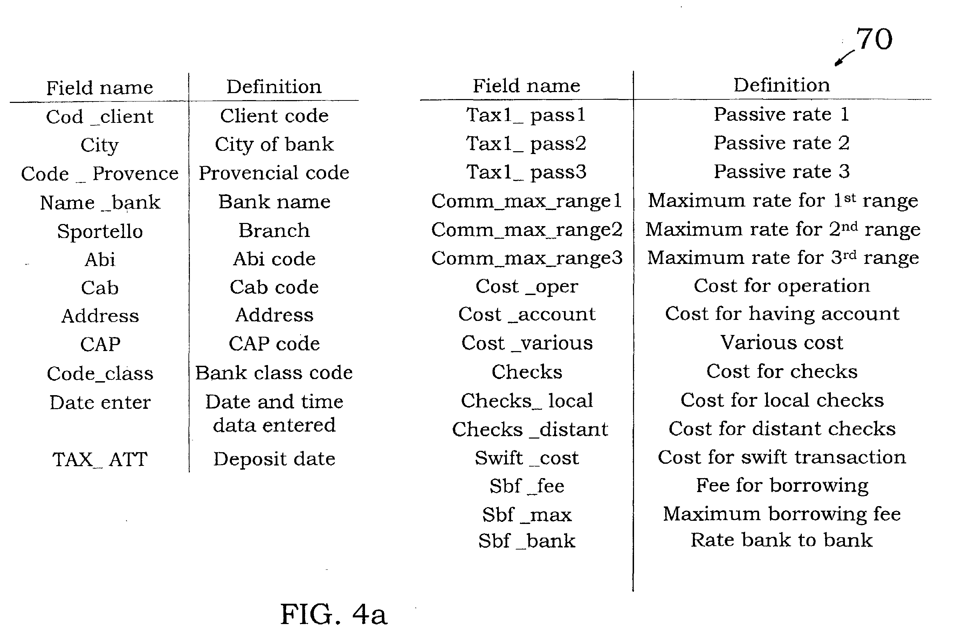

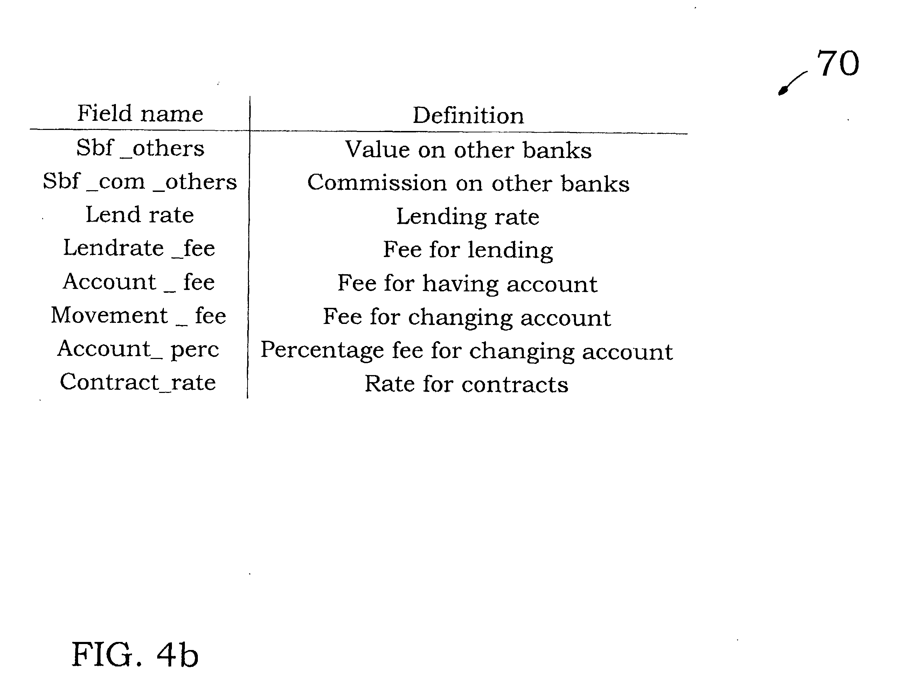

Every user is associated with a particular bank. There may be several users entering data for a particular bank and in that case, entered data may be checked against one another for consistency. Examples of types of data that may be stored in a table in the database 24 relating to the banks are shown in a list 70 in Figure 4.

The list 70 includes fields related specifically to the banking industry. Of course, it would be easy to change the particular fields stored in order to tailor it to some other industry about which comparison information was sought. Some of the fields in the list 70 include an ABI code and a CAB code. The combination of these two codes uniquely identifies a particular single agency of a bank. Oftentimes one bank will have several agencies having local branches, but each of the branches will have a specific ABI and CAB code. It is important to track all of the individual branches of each bank because some of the branches may differ in the fees or rates that they charge.

Each single agency, identified by the ABI + CAB code will also include an address, as well as a city code and a provence code. These fields can be seen in the list of fields 70 in Figures 4a and 4b. As with the list 60 of Figure 3, it is relatively unimportant how the data is actually gathered from the user and stored in the database 24, but the most convenient way would be to have a series of HTML screens presented to the user of the user computer 12, and having the user fill in the requested data and send it back to the database 24 over the Internet 14 and by using the above-mentioned tools.

Some of the indicators collected from the user would include passive and active interest rates, fees for payment using checks, loan rates, and other charges typically assessed to the user for utilizing services of the bank. More than one rate may be collected for a particular service, for example, the bank may have more than one lending rate. Additionally, although a large number of fields are presented in the list 70, nothing prevents the addition of other fields, even after data has been collected from some users. In that case, the screens would be modified to collect the information from all future users.

As the user enters this data, normalized checks are performed to ensure the user has entered reasonable data. For instance, loan rates may be accepted between 5 and 20 percent, and if a user entered data outside of this range, the central process would not accept the data and would prompt the user to enter a value within the acceptable range. Once correctly entered, each of these indicators are stored in the database 24.

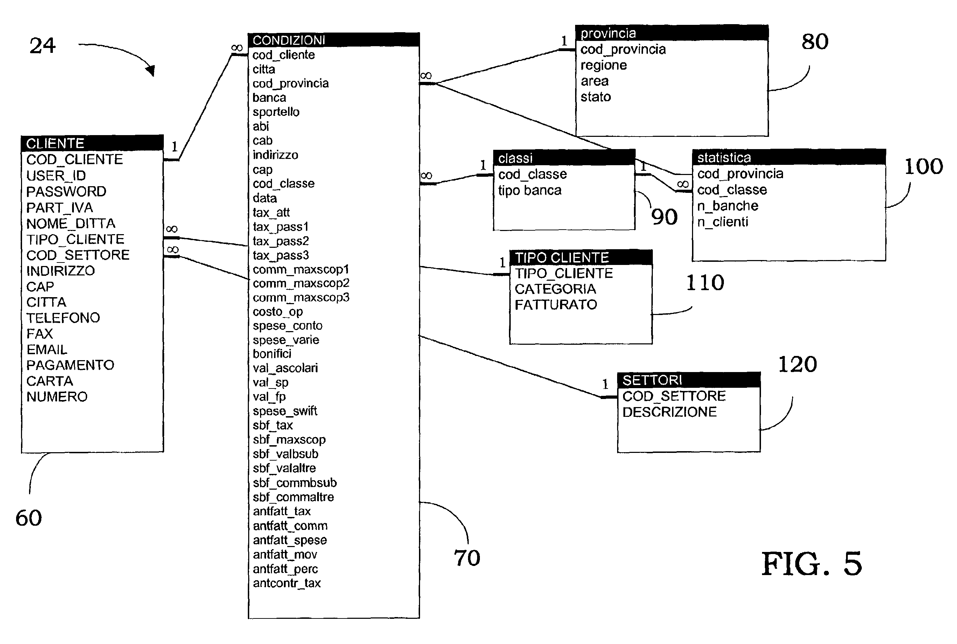

Shown in Figure 5 is an example of how tables within the database 24 can be related. Shown are tables 60 and 70 that correspond directly to the lists 60 and 70 in Figures 3, 4a and 4b. The indicators shown in list 70 are linked to the table 60 via the cod_client, or "client code". The particular set of data can always be linked back to the user who entered the data. In this way, data collected from particular users or a particular class of users can be omitted when doing calculations of data as a whole.

For example, banks may give a preferential rate for a certain type of user, large businesses, for instance. To include the preferential rate when averaging all of the rates across all of the users would cause distortions from the true average of what was available to the majority of the users. Therefore, in some calculations, these data from the large businesses could be eliminated. The structure of the database 24 allows the easy inclusion or exclusion of data for certain calculations.

In addition to the tables 60 and 70, the database 24 can contain a provencial list 80, a classification list 90, a statistical list 100, a listing 110 of the types of clients, and a sector list 120. These lists or tables are related to one another as shown in Figure 5, except for the sector list 120 that stands alone in this embodiment.

Additional data that is more subjective can also be collected about the individual bank from the user. For instance data can be collected about the length of time spent waiting for an available teller, and the overall professionality of the individual bank, or other subjective data. Information may be collected about the number of services the individual bank offers. These subjective data will be stored in the database 24, and linked to the particular user by the client code along with the objective data listed above with reference to list 70 of Figures 4a and 4b.

Once several users have entered data into the database 24, a number of calculations are performed on the data. In one embodiment, data is pre-loaded into the database 24 from any available source before any user begin entering in their own data. In that way, even the first user will be able to find some useful data in the database 24.In one embodiment, these calculations occur in real-time, and are available to the user immediately after the user has entered the relevant data and the database 24 is updated.

Examples of these calculations that can be performed are nearly endless, but a few are listed and explained below as examples.

First, the data can simply be listed for use by the user. A user may elect to see all of the banks that are in a particular zone, and that report can be simply provided by querying the database for all of the banks in the zone.

Another advantage to using a relational database for the database 24 is its ease of retrieving information. Using Structured Query Language (SQL) commands it is very easy to retrieve this information from the database, as is known in the art. Also known in the art is the way to hide from the user all of the SQL commands that are ultimately presented to the database 24. The user would only click specified "buttons" presented on the HTML page, which are linked to the database using specialized SQL commands.

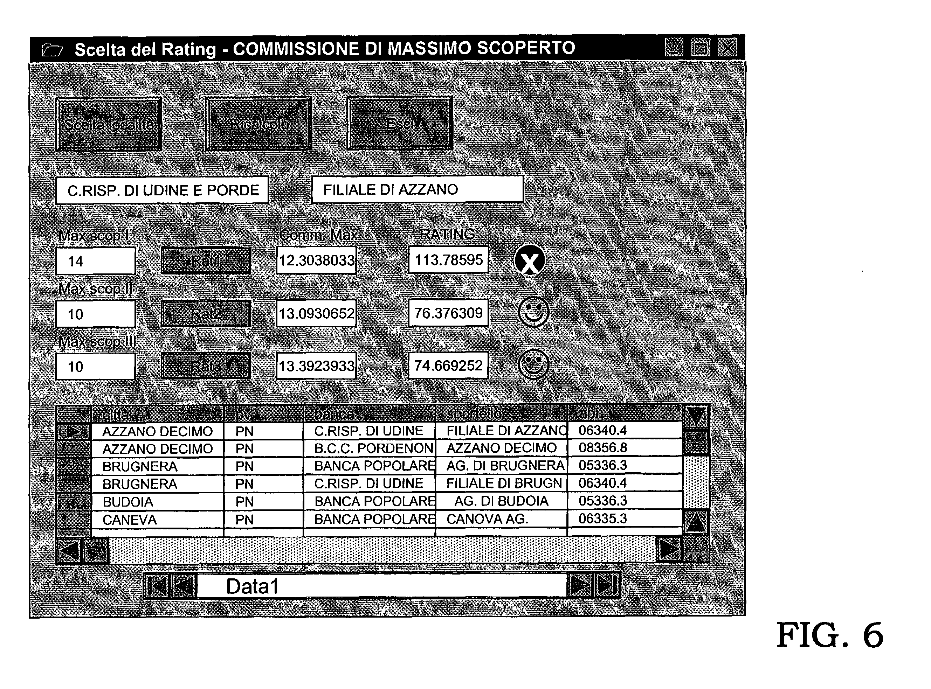

Besides simply listing data that is already present in the database 24, calculations can be performed. For instance, the user may be select to see a report giving the average rates for one of the fields listed in table 70. Shown in Figure 6 is a report generated from data stored in the database. In this report is a listing the maximum cost data from the user's bank, on the left, and the average cost of all of the banks within the selected region. On the right hand side is a column of a rating, where the user's bank is compared to the averages selected for the geographical region.

In selecting the banks included in the calculation, any region that is listed in the database 24 can be considered. For instance, the user may choose to have all of the banks in the country considered, and all of the banks in the country for which data is stored in the database 24 will be included in the calculation of averages. Or, the user may elect to have only banks within a very narrow geographical region considered, for instance a certain plaza within a city. In that case, only those banks which are located in that plaza are considered for the calculations. In this way, the user can tailor the response to exactly what is desired. It would be possible to select even a single bank, so that the user can find all of the pertinent data about that bank if the user so desired, although in a preferred embodiment of this invention, the most restrictive geographic area is limited to a small group of banks so that no one bank is individually selected. However, the individual level is specifically contemplated in this invention and it would be easy to implement this level of control by a narrowing of the geographic inclusions. A further possibility would be to be able to see the bank with the best and the worst rates for a selected region, or to provide a list of all of the banks stored within the database 24 for the given region sorted based on a field selected by the user. Of course, the sorted list could be presented in either a "best first" sorted list, or the reverse "best last" sorted list.

An interesting feature of the calculations of the data stored in the database 24 is that the calculations can take place in real time, and include the data that was just entered by the user. For instance, the database may include data on only two banks in a given piazza, and an average or other data manipulation of the data in the files stored in the table 70 is performed and also resides in the database 24. If a user of the user computer 12 happens to be a customer of a third bank in the same piazza, the calculations can be automatically performed as the customer enters the data. Then, when the customer goes to the report screen in order to see the calculated data for their particular zone, which in this case now includes three banks in the piazza, the calculated numbers take into account the data just entered by the user. In this way, the calculated data becomes more correct because of the larger sample size. If this is taken to the logical extreme, there will be millions of data points available on thousands of banks throughout the country, which will be able to be viewed by users. With this much data, the information about the banks should be very accurate, and will enable users to easily compare their bank with others in the same region.

A simple comparison can be done as shown on Figure 6. In this example, three rates are shown, rate 1, rate 2, and rate 3. Three averages are also shown, one for each rate. The data for the customer's bank is in the left hand column, with the average of all of the banks in the region that the customer has selected in the middle. Regarding rate 1, the customer's bank has a rate of 14, while the average of all the selected banks is 12.3038033. Therefore the customer's bank has a rate that is higher, or more expensive than the average bank in that zone, and a rating and simple indicator, (in this case a circle containing a red "x") are also shown. The customer can immediately see that their bank has a rate higher than the average bank. However, with regard to the rates 2 and 3, the customer's bank has rates below the average of the banks within the selected zone. In that case the rating is more favorable, and "happy faces" are instead shown to the user next to those rates where their bank is better than the average. Another embodiment would be to present two "happy faces" when the user's bank would equal the absolute lowest bank in the selected report, or conversely, two "red x's" when the user's bank was the absolute highest in the selected report.

Additional calculations are possible, for instance a statistical derivation of a variance or standard deviation from the average may be performed. Additionally, instead of an average, perhaps a median score could be presented, where ½ of the rates are above the median value and ½ of the rates are below the value. That presentation would ensure that a particularly high or low rate would not skew the ratings by much, as would calculating an average in that case.

In these calculations for the individual banks, both qualitative and quantitative calculations can be performed.

It is important to realize that these comparisons and listings become more accurate and more helpful to the users as more data about more banks is entered.

## Claims

1. A system for collecting disparate data, comprising:
- a computer network structured to link a plurality of computers to one another regardless of type of computer;
- a central server machine coupled to the computer network and to a database for running a plurality of programs, a first of the programs being a database managing program, a second of the programs being a client interactive program that accepts information from and provides information to a client interface,
- the system **characterized in that** it further includes, as a program running on said central server machine, a calculation program that automatically performs statistical calculations based on data that was stored in said database prior to a particular user accessing said database plus data provided by said particular user, and makes results of said calculations available to said user interface running on said central server machine.

2. A system according to claim 1, **characterized in that** said computer network is the Internet.

3. A system according to claim 1, **characterized in that** said user interface is connected to the Internet via a LAN.

4. A system according to claim 1, **characterized in that** said statistical calculations take place in real-time.

5. A system according to claim 1, **characterized in that** said database is a relational database.

6. A system according to claim 1, **characterized in that** said interactive program with the user automatically compares data provided by said particular user to said statistical calculations and provides an indicator of the comparison.

7. A system according to claim 6, **characterized in that** said comparison indicator is an immediately recognizable visual indicator.

8. A method of collecting data from widespread sources, including the steps of:
- creating a data collection related to a database structure on a central server computer;
- transmitting said data collection form over a computer network to a computer user for display on a computer screen;
- accepting data entered by said computer user in said data collection form over said computer network;
- **characterized in that**:
- performing calculations on data already present in said database and on data accepted by the user;
- making results of said calculations available to said computer user.

9. A method according to claim 8, **characterized in that** said calculations are statistic ones and are made available to the user in real time.

10. A method according to claim 8, **characterized in that** the computer network is Internet.
